(19) Europäisches Patentamt
European Patent Office
Office européen des brevets

(11) **EP 2 234 190 A1**

(12) **EUROPEAN PATENT APPLICATION**
published in accordance with Art. 153(4) EPC

(43) Date of publication:
**29.09.2010 Bulletin 2010/39**

(51) Int Cl.:
*H01M 4/48* (2010.01)  *C01G 53/00* (2006.01)

(21) Application number: **09722831.6**

(22) Date of filing: **18.03.2009**

(86) International application number:
**PCT/JP2009/001211**

(87) International publication number:
**WO 2009/116284 (24.09.2009 Gazette 2009/39)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **19.03.2008 JP 2008071474**
**17.03.2009 JP 2009064842**

(71) Applicant: **Panasonic Corporation**
**Kadoma-shi**
**Osaka 571-8501 (JP)**

(72) Inventors:
• **OKADA, Yukihiro**
**1-61, Shiromi 2-chome,**
**Chuo-ku, Osaka-shi,**
**Osaka 540-6207 (JP)**
• **FUJITA, Hideaki**
**1-61, Shiromi 2-chome,**
**Chuo-ku, Osaka-shi,**
**Osaka 540-6207 (JP)**

• **WADA, Naoyuki**
**1-61, Shiromi 2-chome,**
**Chuo-ku, Osaka-shi,**
**Osaka 540-6207 (JP)**
• **HANAOKA, Shigeru**
**1-61, Shiromi 2-chome,**
**Chuo-ku, Osaka-shi,**
**Osaka 540-6207 (JP)**
• **ARIMOTO, Shinji**
**1-61, Shiromi 2-chome,**
**Chuo-ku, Osaka-shi,**
**Osaka 540-6207 (JP)**
• **OKUYAMA, Takahiro**
**1-61, Shiromi 2-chome,**
**Chuo-ku, Osaka-shi,**
**Osaka 540-6207 (JP)**

(74) Representative: **TBK-Patent**
**Bavariaring 4-6**
**80336 München (DE)**

(54) **NONAQUEOUS ELECTROLYTE SECONDARY BATTERY**

(57)   The present invention mainly relates to non-aqueous electrolyte secondary batteries. The present invention intends to provide a non-aqueous electrolyte secondary battery having excellent cycle characteristics and excellent storage characteristics.

The non-aqueous electrolyte secondary battery of the present invention includes a positive electrode including a positive electrode active material, a negative electrode including a negative electrode active material, a separator interposed between the positive electrode and the negative electrode, and a non-aqueous electrolyte. The positive electrode active material includes secondary particles each being an aggregate of a plurality of primary particles, and the primary particles have an average particle diameter of 0.8 $\mu$m or less. The secondary particles each contain aluminum atoms, and the content of the aluminum atoms is larger in a portion near the surface of each of the secondary particles than in a portion near the center of each of the secondary particles.

FIG. 1

**Description**

Technical Field

The present invention mainly relates to non-aqueous electrolyte secondary batteries, and specifically relates to improvement of positive electrode active material for use in non-aqueous electrolyte secondary batteries.

Background Art

Non-aqueous electrolyte secondary batteries such as lithium secondary batteries have a high operating voltage and a high energy density. For this reason, non-aqueous electrolyte secondary batteries have been put into practical use as driving power sources for portable electronic equipment such as mobile phones, notebook computers, and video camcorders, and the application thereof has been growing rapidly.
Such non-aqueous electrolyte secondary batteries are now widely used not only for small consumer appliances as listed above, but also as a large-size battery for power storage, a large-size battery for driving a motor of hybrid electric vehicles (HEVs), and other applications.
It is strongly required for a non-aqueous electrolyte secondary battery for motor driving to have excellent output characteristics that enable improvement of the acceleration performance, hill-climbing performance, and fuel consumption efficiency of HEVs. Specifically, such a non-aqueous electrolyte secondary battery for motor driving are required to generate a current as large as 20 to 40 C hour rate, which is several tens of times as large as that required for a general battery for portable equipment, although such a large current is required only for a short period of time.
On the other hand, a non-aqueous electrolyte secondary battery for HEVs is used under such condition that the state of charge (SOC) varies within a comparatively small range centering around 60%, although depending on the control system.
Meanwhile, plug-in hybrid electric vehicles (PHEVs) that emit less greenhouse gas have been developed and commercialized in recent years in response to the growing concern about environment and energy. Unlike the conventional hybrid electric vehicles, PHEVs can run on electric power only without an engine. In addition, with regard to a battery to be mounted on PHEVs, the batteries can be charged at home.
When PHEVs run only on electric power from a battery, the SOC of the battery mounted on the PHEVs is greatly lowered due to the running. In other words, a battery to be mounted on plug-in hybrid electric vehicles is used under such condition that the SOC varies within a wide range (e.g., 30 to 90%) so that a specific distance traveled can be ensured.
Since a battery mounted on PHEVs exhibits a low SOC after running, the battery is charged repeatedly from a household power outlet. If the discharge capacity of the battery is reduced every time charging and discharging are repeated, the distance traveled cannot be maintained long. For this reason, a battery to be mounted on PHEVs is required to exhibit excellent cycle characteristics even when used under such condition that the SOC varies within a wide range
Moreover, the internal resistance of non-aqueous electrolyte secondary batteries may significantly increase when exposed to high temperatures for a long period of time. The increase in the internal resistance causes the cycle characteristics of the batteries to deteriorate. Accordingly, the internal resistance of non-aqueous electrolyte secondary batteries needs to be kept low, that is, the deterioration in the storage characteristics needs to be prevented.
As described above, it is required for a non-aqueous electrolyte secondary battery to be mounted on PHEVs to have excellent cycle characteristics and excellent storage characteristics.
Although not relating to a non-aqueous electrolyte secondary battery to be mounted on PHEVs, Patent Literature 1 discloses, for the purpose of improving the cycle characteristics of lithium secondary batteries, using a positive electrode active material comprising a powder of lithium-transition metal composite oxide, in which the powder particles forming the powder are present almost alone without being formed into an aggregate. In short, most part of the positive electrode active material of Patent Literature 1 remains in the form of primary particles.
It should be noted that a lithium-transition metal composite oxide used in non-aqueous electrolyte secondary batteries is generally composed of secondary particles which are aggregates of primary particles.
Patent Literature 2 discloses, for the purpose of providing a non-aqueous electrolyte secondary battery in which the safety is improved without sacrificing the discharge capacity and the cycle characteristics, using an active material coated with a coating material containing Al and O.
Further, Patent Literature 3 discloses, mainly for the purpose of improving the discharge capacity, the cycle characteristics and the discharge characteristics, using an active material represented by $Li_aNi_{1-b-c}Co_bM_cO_2$, where M is one or two or more selected from the group consisting of Mn, Al, Ti, Cr, Mg, Ca, V, Fe and Zr, and $0.97 \leq a \leq 1.05$, $0.01 \leq b \leq 0.30$, and $0 \leq c \leq 0.10$.

Patent Literature 1: Japanese Laid-Open Patent Publication No. 2003-68300

Patent Literature 2: Japanese Laid-Open Patent Publication No. 2003-257427
Patent Literature 3: Chinese PatentApplication Publication No. 1581543

Disclosure of the Invention

Problem to be Solved by the Invention

However, the techniques disclosed in Patent Literatures 1 and 2 primarily intend to improve the cycle characteristics, and do not intend to improve both the cycle characteristics and the storage characteristics. In other words, in Patent Literatures 1 and 2, the active material particles are not designed to provide excellent cycle characteristics as well as excellent storage characteristics.
Patent Literature 3 intends to improve the discharge capacity, the cycle characteristics and the discharge characteristics as described above, but does not intend to improve the storage characteristics. As such, in Patent Literature 3 also, the active material particles are not designed to provide excellent cycle characteristics as well as excellent storage characteristics.

Moreover, according to the technique disclosed in Patent Literature 1, the synthesized active material particles must be pulverized into primary particles. Due to the necessity of pulverization, the production costs increase.

In this context, the present invention intends to provide a non-aqueous electrolyte secondary battery having excellent cycle characteristics as well as excellent storage characteristics.

Means for Solving the Problem

A non-aqueous electrolyte secondary battery of the present invention includes a positive electrode including a positive electrode active material, a negative electrode including a negative electrode active material, a separator interposed between the positive electrode and the negative electrode, and a non-aqueous electrolyte. The positive electrode active material comprises secondary particles each being an aggregate of a plurality of primary particles, and the primary particles have an average particle diameter of 0.8 $\mu$m or less. The secondary particles contain aluminum atoms, and the content of the aluminum atoms is larger in a portion near the surface of each of the secondary particles than in a portion near the center of each of the secondary particles. It is preferable that the content of the aluminum atoms increases from the portion near the center of each of the secondary particles toward the surface of each of the secondary particles.

It is preferable that the secondary particles contain aluminum atoms, lithium atoms, and a metal element other than aluminum atoms and lithium atoms, and the ratio of the amount of the aluminum atoms to the total amount of the metal element other than aluminum atoms and lithium atoms plus the aluminum atoms is 2 to 20 mol%.

It is preferable that the secondary particles include a lithium-transition metal composite oxide containing aluminum atoms. The lithium-transition metal composite oxide containing aluminum atoms preferably contains Li, Ni, Co and Al only as metal elements.

The present invention further relates to a plug-in hybrid electric vehicle including the above-described non-aqueous electrolyte secondary battery.

The present invention further relates to a method for producing a positive electrode active material, the method comprising the steps of:

(a) allowing a compound containing aluminum atoms to be carried on a surface of a hydroxide containing a transition metal element to give an active material precursor,
(b) mixing the active material precursor with a compound containing lithium atoms to give a mixture, and
(c) heating the mixture to give a lithium-transition metal composite oxide containing aluminum atoms, wherein

the step (a) includes a step of mixing an aqueous solution of an aluminum salt and an alkali aqueous solution with water in which a hydroxide containing a transition metal element is dispersed, to give particles containing aluminum atoms, and washing the particles containing aluminum atoms with water, followed by drying, to give the active material precursor.

Effect of the Invention

In the present invention, the average particle diameter of the primary particles constituting secondary particles of the positive electrode active material is set to be small, and the content of aluminum atoms is set to be larger in a portion near the surface of each of the secondary particles than in a portion near the center thereof. As such, it is possible to prevent a crack from occurring on the positive electrode active material during repeated charge/discharge cycles and to prevent a deterioration of the positive electrode active material during storage at high temperature. Therefore, the present invention can provide a non-aqueous electrolyte secondary battery having excellent cycle characteristics and excellent storage characteristics.

Brief Description of the Drawings

[Fig. 1] A longitudinal cross-sectional view schematically showing a positive electrode active material included in a non-aqueous electrolyte secondary battery according to one embodiment of the present invention.
[Fig. 2] A longitudinal cross-sectional view schematically showing the non-aqueous electrolyte secondary battery according to one embodiment of the present invention.

Best Mode for Carrying Out the Invention

A non-aqueous electrolyte secondary battery of the present invention includes a positive electrode including a positive electrode active material, a negative electrode including a negative electrode active material, a separator interposed between the positive electrode and the negative electrode, and a non-aqueous electrolyte. The positive electrode active material includes secondary particles each being an aggregate of a plurality of primary particles, and the primary particles have an average particle diameter of 0.8 $\mu$m or less. The secondary particles contain aluminum atoms (Al atoms), and the content of the aluminum atoms is larger in a portion near the surface of each of the secondary particles than in a portion near the center of each of the secondary particles. It is preferable that the content of the aluminum atoms increases from the portion near the center of each of the secondary particles toward the surface thereof. The content of the aluminum atoms may increase stepwise or continuously from the portion near the center of each of the secondary particles toward the surface thereof.

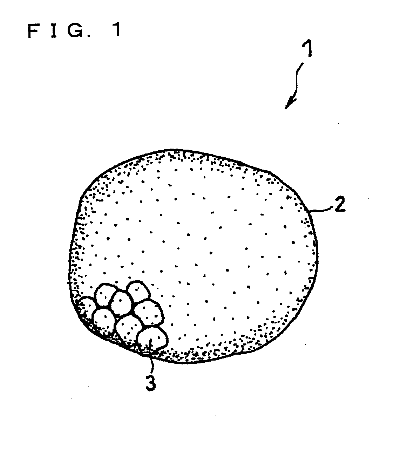

Fig. 1 is a longitudinal cross-sectional view schematically showing a positive electrode active material included in a non-aqueous electrolyte secondary battery according to one embodiment of the present invention.
A positive electrode active material 1 in Fig. 1 includes secondary particles 2 each being an aggregate of a plurality of primary particles 3. In Fig. 1, only part of the plurality of primary particles 3 are shown.
In the present invention, the average particle diameter of the primary particles 3 constituting the secondary particles 2 included in the positive electrode active material is set to be as small as 0.8 $\mu$m or less. Further, the content of the aluminum atoms is larger in a portion near the surface of each of the secondary particles 2 than in a portion near the center of each of the secondary particles 2. In other words, aluminum atoms are present inside the second particles 2, although being less present as compared to in the portion near the surface.

When the average particle diameter of the primary particles 3 is small, and the positive electrode active material 1 contains aluminum atoms as described above, the degrees of expansion and contraction that occur during charging and discharging is small, and therefore, the stress to be applied between the primary particles 3 is also small. As such, even when the positive electrode active material 1 expands and contracts as charging and discharging are repeated, the influence due to the change in volume of the positive electrode active material 1 can be reduced. For this reason, even when a charge/discharge cycle is repeated, cracks on the secondary particle 2 can be significantly reduced.
Conversely, when the average particle diameter of the primary particles 3 constituting the secondary particles 2 is large, the degrees of expansion and contraction of the primary particles 3 that occur during charging and discharging is large, and therefore, a large stress is applied between the primary particles 3 adjacent to each other. As such, the primary particles 3 are likely to be separated from each other, likely causing cracks on the secondary particles 2.
The average particle diameter of the primary particles 3 is preferably 0.5 $\mu$m or less. It should be noted that the minimum average particle diameter of the primary particles 3 is about 0.1 $\mu$m, although depending on the production method.

Further, in the present invention, the secondary particles 2 contain aluminum atoms, and the content of the aluminum atoms is larger in a portion near the surface of each of the secondary particles 2 than in a portion near the center thereof. Since the content of the aluminum atoms is larger in the portion near the surface of the secondary particle 2, it is possible to prevent formation of a coating film derived from non-aqueous electrolyte during storage in high temperature environment, on the surface of the secondary particle 2, namely, on the surface of the positive electrode active material 1. As such, the deterioration of the ability of the positive electrode active material for absorbing and desorbing lithium ions can be prevented. As a result, the increase of the internal resistance of the battery when stored at high temperature can be suppressed.
The secondary particles 2 may contain aluminum atoms, lithium atoms, and a third metal element other than aluminum atoms and lithium atoms. The ratio of the amount of the aluminum atoms to the total amount of metal elements other than Li (i.e., the total amount of the aluminum atoms and the third metal element) at the surface of the secondary particle 2 is preferably 10 to 30 mol%.

The primary particles 3 can be observed, for example, under a scanning electron microscope. The average particle diameter of the primary particles 3 can be determined by observing the cross section of the secondary particles 2 under the electron microscope, measuring the maximum diameters of, for example, ten primary particles 3, and averaging the measured values.

The average particle diameter of the secondary particles 2 is preferably 2 to 20 $\mu$m, and more preferable 5 to 12 $\mu$m. It should be noted that the average particle diameter of the secondary particles 2 can be determined in the same manner as that of the primary particles.

As the positive electrode active material 1, a lithium-transition metal composite oxide containing aluminum atoms may be used. For example, in the case of the positive electrode active material 1 of Fig. 1, the secondary particles 2 are preferably composed of a lithium-transition metal composite oxide containing aluminum atoms.

The transition metal contained in the above lithium-transition metal composite oxide is at least one selected from the group consisting of Ni, Co and Mn. Among these, the lithium-transition metal composite oxide preferably contains Ni. When a lithium-transition metal composite oxide containing Ni is used, a coating film derived from non-aqueous electrolyte tends to be formed on the surface thereof; however, the formation of such a coating film is remarkably prevented by the present invention. For this reason, by using a lithium-transition metal composite oxide containing Ni as the positive electrode active material, the effect of the present invention is easily obtained.

Here, the ratio of the amount of Ni to the total amount of metal elements other than Li in the lithium-transition metal composite oxide is preferably 45 to 90 mol%.

The ratio of the whole amount of aluminum atoms contained in the secondary particles 2 to the total amount of metal elements other than U contained in the secondary particles 2 is preferably 2 to 20 mol%, and more preferably 5 to 10 mol%. When the whole amount of aluminum atoms is less than 2 mol%, sufficient storage characteristics may not be obtained. When the whole amount of aluminum atoms is more than 20 mol%, a positive electrode active material having a sufficient capacity may not be obtained. The above positive electrode active material is a solid solution; however, when the amount of aluminum atoms is large, an active material (a solid solution) may not be formed.

The amount of aluminum atoms contained in the positive electrode active material 1 (the secondary particles 2) can be measured by ICP emission spectrometry.

It is particularly preferable that the lithium-transition metal composite oxide containing aluminum atoms contains Li, Ni, Co and Al only as metal elements. Specifically, the lithium-transition metal composite oxide containing aluminum atoms is preferably represented by $U_aNi_bCo_cAl_dO_2$, where $1.00 \leq a \leq 1.10$, $0.60 \leq b \leq 0.88$, $0.10 \leq c \leq 0.20$, and $0.02 \leq d \leq 020$. The composite oxide represented by the above formula has a high capacity and an excellent durability.

The positive electrode active material as described above can be produced by a production method comprising the steps of:

(a) allowing a compound containing aluminum atoms to be carried on a surface of a hydroxide containing a transition metal element to give an active material precursor,
(b) mixing the active material precursor with a compound containing lithium atoms, and
(c) heating the resultant mixture to give a lithium-transition metal composite oxide containing aluminum atoms.

In the step (a), the active material precursor can contain a hydroxide containing a transition metal element and an aluminum hydroxide carried on the surface of the hydroxide. Such an active material precursor is obtained by mixing an aqueous solution of an aluminum salt and an alkali aqueous solution with water in which a hydroxide containing a transition metal element is dispersed, to give particles containing aluminum atoms, washing the particles containing aluminum atoms with water, and drying the particles.

As the aluminum salt, for example, aluminum sulfate may be used. As the alkali aqueous solution, for example, a sodium hydroxide aqueous solution may be used.

The transition metal element contained in the hydroxide is selected appropriately according to the type of the positive electrode active material to be used. One or two or more transition metal elements may be contained in the hydroxide. Examples of such transition metal elements include Ni, Co and Mn as described above.

The hydroxide containing a transition metal element may be prepared by any method known in the art, such as a coprecipitation method.

It should be noted that the above hydroxide is also composed of secondary particles each being an aggregate of primary particles. The average particle diameter of the secondary particles constituting the hydroxide is preferably 2 to 20 $\mu$m.

In the step (a), aluminum salt and alkali are added to a dispersion obtained by dispersing a hydroxide containing a transition metal element in water. This allows aluminum hydroxide to be thinly and uniformly carried on the surface of the hydroxide containing a transition metal element As such, in the step (c) to follow, aluminum atoms can be introduced into the hydroxide containing a transition metal element from the entire surface of the hydroxide toward the center portion thereof.

On the other hand, in Patent Literature 3, a lithium compound, a hydroxide containing Ni and Co, and a compound containing M are mixed together in a ball mill, and the resultant mixture is subjected to two sintering processes performed under different conditions. As described above, the lithium compound, the hydroxide containing Ni and Co, and the compound containing M are merely mixed together. As such, according to the production method disclosed in Patent Literature 3, it is impossible to allow the compound containing M (e.g., Al) to be uniformly carried on the surface of the hydroxide containing Ni and Co. When the compound containing M is not uniformly carried on the surface of the hydroxide containing Ni and Co, if the same amount of Al atoms as in the present invention are added, it is impossible to obtain an effect equivalent to that of the present invention. For this reason, in the technique as disclosed in Patent Literature 3, a larger amount of Al atoms than that in the present invention must be added, in order to obtain an effect equivalent to that of the present invention. Moreover, if a large amount of Al atoms are added, an aluminum oxide may remain on the surface of the positive electrode active material after the sintering processes. The aluminum oxide remaining on the surface of the positive electrode active material, if any, may reduce the reactivity of the positive electrode active material. In addition, depending on the conditions for mixing a lithium compound, a hydroxide containing Ni and Co, and a compound containing M, cracks may occur on the hydroxide containing Ni and Co.

In the step (b), in principle, the active material precursor is mixed with a compound containing lithium atoms in a stoichiometric ratio that provides a positive electrode active material having a predetermined composition. As the compound containing lithium atoms, for example, lithium hydroxide may be used.

Here, the active material precursor may be mixed with a compound containing lithium atoms by any method without particular limitation.

In the step (c), the mixture of the active material precursor and the compound containing lithium atoms is heated. The temperature in the heating is preferably 740°C to 820°C. The duration for the heating is preferably 5 to 24 hours.

By the above heating, aluminum atoms can be diffused into the secondary particles being the positive electrode active material such that the content of the aluminum atoms is larger in a portion near the surface of each of the positive electrode active material particles than in a portion near the center of thereof. Further, by adjusting the average particle diameter of the primary particles contained in the hydroxide and/or performing the heating, the average particle diameter of the primary particles constituting the positive electrode active material can be set to 0.8 μm or less.

When the heating temperature and duration are outside the above-described ranges, the average particle diameter of the primary particles may exceeds 0.8 μm, aluminum atoms may not be diffused to the inside of the positive electrode active material, or the concentration gradient of aluminum atoms may not be formed in the positive electrode active material.

The heating is preferably performed in an oxygen atmosphere because a sufficient capacity can be obtained.

As described above, the whole amount of aluminum atoms contained in the positive electrode active material is preferably 2 to 20 mol% of the total amount of metal elements other than Li contained in the positive electrode active material. By adjusting the amount of the compound containing aluminum atoms to be added in the step (a), the amount of aluminum atoms contained in the positive electrode active material can be controlled to be within the above range.

It should be noted that, according to the production method as described above, aluminum hydroxide can be thinly and uniformly carried on the surface of the hydroxide containing a transition metal element, and therefore, aluminum atoms can be introduced into the hydroxide containing a transition metal element from the entire surface of the hydroxide toward the center thereof. As such, aluminum atoms can be uniformly introduced into the surface layer portion of the lithium-transition metal composite oxide containing aluminum atoms. Further, in the obtained lithium-transition metal composite oxide containing aluminum atoms, the concentration gradients at a plurality of points on a circle or sphere having a predetermined radius from the center thereof can be made almost equal.

The non-aqueous electrolyte secondary battery of the present invention is particularly suitable for use as a power source for plug-in hybrid electric vehicles. When used for this application, the non-aqueous electrolyte secondary battery preferably has a capacity of 10 Ah to 30 Ah.

The non-aqueous electrolyte secondary battery of the present invention, because of its excellent cycle characteristics and excellent storage characteristics as described above, is also suitable for use as a power source for hybrid electric vehicles, a power source for small consumer portable devices, and the like. When used as a power source for hybrid electric vehicles, the non-aqueous electrolyte secondary battery preferably has a capacity of 3 Ah to 10 Ah. When used as a power source for small consumer portable devices, the non-aqueous electrolyte secondary battery preferably has a capacity of 2 Ah to 4 Ah.

The components other than the positive electrode active material of the non-aqueous electrolyte secondary battery of the present invention are described below.

The positive electrode may include a positive electrode current collector and a positive electrode active material layer carried on the current collector The positive electrode active material layer may include the positive electrode active material and, as needed, a conductive agent and a binder. Likewise, the negative electrode may include a negative electrode current collector and a negative electrode active material layer carried on the current collector. The negative electrode active material layer may include the negative electrode active material and, as needed, a binder and a conductive agent.

The positive electrode current collector may be made of any material known in the art. Examples of such a material include stainless steel, aluminum, and titanium. The negative electrode current collector may be made of any material known in the art. Examples of such a material include copper, nickel, and stainless steel.

The thicknesses of the positive electrode current collector and the negative electrode current collector are not particularly limited, but in general, are 1 to 500 $\mu$m.

Examples of the negative electrode active material include graphites such as natural graphite (e.g., flake graphite) and artificial graphite; carbon blacks such as acetylene black, Ketjen black, channel black, furnace black, lamp black, and thermal black; carbon fibers; metal fibers; alloys; lithium metal; tin compounds; silicides; and nitrides. These materials may be used singly or in combination of two or more.

Examples of the binder to be used in the positive electrode and the negative electrode include polyethylene, polypropylene, polytetrafluoroethylene (PTFE), polyvinylidene fluoride (PVDF), tetrafluoroethylene-hexafluoropropylene copolymer (FEP), and vinylidene fluoride-hexafluoropropylene copolymer.

Examples of the conductive agent to be used in the positive electrode and the negative electrode include graphites such as natural graphite (e.g., flake graphite), artificial graphite, and expandable graphite; carbon blacks such as acetylene black, Ketjen black, channel black, furnace black, lamp black, and thermal black; conductive fibers such as carbon fibers and metal fibers; metal powders such as copper and nickel; and organic conductive materials such as polyphenylene derivatives. These may be used singly or in combination of two or more.

The non-aqueous electrolyte may include a non-aqueous solvent and a solute dissolved in the non-aqueous solvent. Examples of the non-aqueous solvent include ethylene carbonate, propylene carbonate, dimethyl carbonate, diethyl carbonate, and methyl ethyl carbonate, but are not limited to these. These non-aqueous solvents may be used singly or in combination of two or more.

Examples of the solute include $LiPF_6$, $LiBF_4$, $LiCl_4$, $UAlCl_4$, $LiSbF_6$, $LiSCN$, $LiCl$, $UCF_3SO_3$, $UCF_3CO_2$, $Li(CF_2SO)_2)_2$, $LiAsF_6$, $LiN(CF_3SO_2)_2$, $LiB_{10}Cl_{10}$, and imides. These may be used singly or in combination of two or more.

The separator may be made of any material known in the art. Examples of such a material include polyethylene, polypropylene, a mixture of polyethylene and polypropylene, and a copolymer of ethylene and propylene.

The present invention is described below with reference to examples.

Examples

«Example 1»

(Battery 1)

(1) Formation of positive electrode plate

First, a positive electrode active material was prepared in the manner as described above.

Powdered nickel-cobalt composite hydroxide $(Ni_{0.85}Co_{0.15})(OH)_2$ was added to water, and while being stirred, an aluminum sulfate aqueous solution (concentration: 1 mol/L) and a sodium hydroxide aqueous solution (concentration:1 1 mol/L) were added thereto dropwise. Here, the molar ratio of the total amount of Ni and Co to Al was set to be 93:7.

The resultant particles containing Al were washed with water and dried, thereby to prepare a nickel-cobalt composite hydroxide with the surfaces coated with aluminum hydroxide (hereinafter referred to as a "precursorA").

The precursor A thus obtained was mixed with lithium hydroxide $(Li(OH)_2)$. In the resultant mixture, the molar ratio of lithium to the total amount of metal elements contained in the precursor A was set to be 1:1.

The mixture was baked at 760°C for 12 hours in an oxygen atmosphere, to prepare a positive electrode active material A. The positive electrode active material A thus prepared was $U(Ni_{0.85}C_{0.15})_{0.93}Al_{0.07}O_2$. The average particle diameter of the positive electrode active material A being the secondary particles was 10 $\mu$m. In the positive electrode active material A thus prepared, the amount of Al atoms was 7 mol% of the total amount of metal elements other than U contained in the positive electrode active material A.

The cross section of the prepared positive electrode active material A was line-analyzed using an electron probe microanalyzer (trade name: DX-4, available from EDAX Japan K.K). The result confirmed that the Al concentration increases from the center portion toward the surface of the positive electrode active material A.

Secondly, a positive electrode plate was formed using the positive electrode active material A in the manner as described below.

85 parts by weight of the positive electrode active material A was mixed with 10 parts by weight of carbon powder serving as the conductive agent and a N-methyl-2-pyrrolidone (hereinafter "NMP") solution of polyvinylidene fluoride (hereinafter "PVDF") serving as the binder, to give a positive electrode material mixture paste. The amount of the PVDF added was 5 parts by weight.

The obtained positive electrode material mixture paste was applied onto both surfaces of a 15-$\mu$m-thick positive electrode current collector made of aluminum foil, dried and rolled, to form a positive electrode plate having a thickness of 100 $\mu$m.

(2) Formation of negative electrode plate

A negative electrode plate was formed in the manner as described below.
95 parts by weight of artificial graphite powder serving as the negative electrode active material was mixed with an NMP solution of PVDF serving as the binder, to prepare a negative electrode material mixture paste. The amount of the PVDF added was 5 parts by weight.
The obtained negative electrode material mixture paste was applied onto both surfaces of a 10-$\mu$m-thick negative electrode current collector made of copper foil, dried and rolled, to form a negative electrode plate having a thickness of 110 $\mu$m.

(3) Preparation of non-aqueous electrolyte

The non-aqueous electrolyte was prepared by dissolving lithium hexafluorophosphate (LiPF$_6$) at a concentration of 1.5 mol/L in a mixed solvent containing ethylene carbonate, ethyl methyl carbonate, and dimethyl carbonate (DMC, boiling point: 97°C) in a ratio of 1:1:8 by volume.

(4) Fabrication of sealed secondary battery

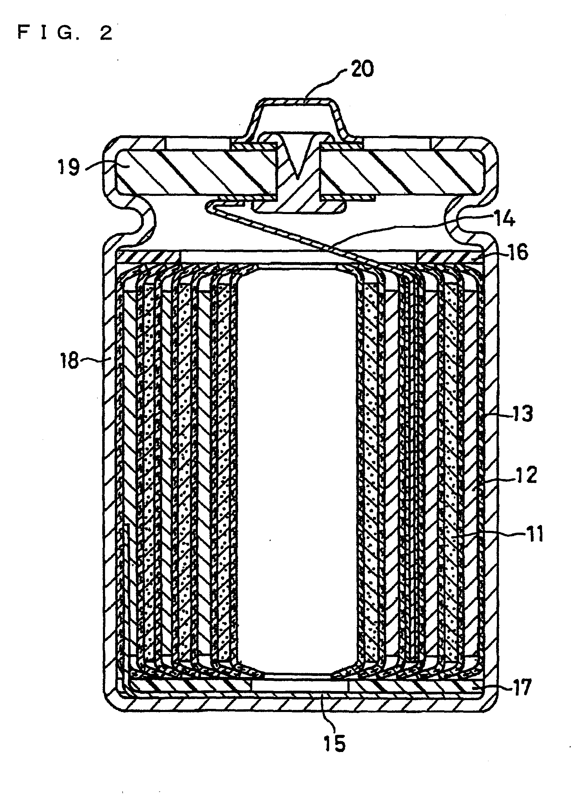

A cylindrical sealed secondary battery as shown in Fig. 2 was fabricated.
A 25-$\mu$m-thick separator 13 was placed between the positive electrode plate 11 and the negative electrode plate 12 obtained in the above, to prepare a laminate. The prepared laminate was spirally wound, to form a cylindrical electrode assembly of 25.0 mm$\varnothing$ in diameter.
The electrode assembly thus formed was accommodated together with 15 mL of the non-aqueous electrolyte prepared in the manner as described above, into a nickel-plated bottomed iron-made battery case 18 of 25.5 mm$\varnothing$ in inner diameter and 0.25 mm in thickness. One end of a positive electrode lead 14 made of aluminum was connected to the Positive electrode plate 11, and the other end of the positive electrode lead 14 was connected to the back side of a sealing plate 19 electrically connected to a positive electrode terminal 20. On end of a negative electrode lead 15 made of copper was connected to the negative electrode plate 12, and the other end of the negative electrode lead 15 was connected to the bottom of the battery case 18. On the top and the bottom of the electrode assembly, an upper insulating plate 16 and a lower insulating plate 17 were placed, respectively.
The opening end of the battery case 18 was crimped onto the periphery of the sealing plate 19 to seal the opening of the battery case 18, whereby a non-aqueous electrolyte secondary battery was fabricated. The design capacity of the fabricated battery was set to 2000 mAh. The battery thus fabricated was referred to as a battery A

<<Example 2>>

The precursor A as prepared in Example 1 was mixed with lithium hydroxide. In the resultant mixture, the molar ratio of lithium to the total amount of metal elements contained in the precursor A was set to be 1:1.
The resultant mixture was baked at 790°C for 12 hours in an oxygen atmosphere, to prepare a positive electrode active material B. The prepared positive electrode active material B was Li(Ni$_{0.85}$Co$_{0.15}$)$_{0.93}$Al$_{0.07O2}$. The average particle diameter of the positive electrode active material B being the secondary particles was 10 $\mu$m.
A battery B was fabricated in the same manner as in Example 1 except that the positive electrode active material B was used.

<<Comparative Example 1>>

The precursor A as prepared in Example 1 was mixed with lithium hydroxide. In the resultant mixture, the molar ratio of lithium to the total amount of metal elements contained in the precursor A was set to be 1:1.
The resultant mixture was baked at 830°C for 12 hours in an oxygen atmosphere, to prepare a positive electrode active material C. The prepared positive electrode active material C was Li(Ni$_{0.85}$Co$_{0.15}$)$_{0.93}$Al$_{0.07}$O$_2$. The average particle diameter of the positive electrode active material C being the secondary particles was 10 $\mu$m.
A comparative battery C was fabricated in the same manner as in Example 1 except that the positive electrode active material C was used.

<<Comparative Example 2>>

The powdered nickel cobalt composite hydroxide $(Ni_{0.85}Co_{0.15})(OH)_2$ as used in Example 1 was mixed with lithium hydroxide. In the resultant mixture, the molar ratio of U to the total amount of Ni and Co contained in the composite hydroxide was set to be 1:1.

The resultant mixture was baked at 760°C for 12 hours in an oxygen atmosphere, to prepare a positive electrode active material D. The prepared positive electrode active material C was $LiNi_{0.85}Co_{0.15}O_2$. The average particle diameter of the positive electrode active material D being the secondary particles was 10 $\mu$m.

A comparative battery D was fabricated in the same manner as in Example 1 except that the positive electrode active material D was used.

[Evaluation]

(Measurement of average particle diameter of primary particles)

The cross sections of the positive electrode active materials A to D were observed under an electron microscope to measure an average particle diameter of the primary particles of each positive electrode active material. The average particle diameter was determined by measuring the maximum diameters of ten primary particles and averaging the measured values. The results are shown in Table 1.

[Table 1]

|  |  | Average particle diameter of primary particles ($\mu$m) |
|---|---|---|
| Example 1 | Positive electrode active material A | 0.5 |
| Example 2 | Positive electrode active material B | 0.8 |
| Comparative Example 1 | Positive electrode active material C | 1.6 |
| Comparative Example 2 | Positive electrode active material D | 0.5 |

As shown in Table 1, the average particle diameters of primary particles of the positive electrode active materials A, B and D were smaller than the average particle diameter of primary particles of the positive electrode active material C.

(Cycle characteristics)

The cycle characteristics of the batteries A to B and the comparative batteries C to D were evaluated in the manner as desaibed below.

Each battery was charged at 25°C at a constant current of 2000 mA until the battery voltage reached 4.2 V, and then charged at a constant voltage of 4.2 V until the current value reached 100 mA. The battery after charging was discharged at a current of 2000 mA until the battery voltage was reduced to 2.5 V Such a charge/discharge cycle was repeated. The ratio of the discharge capacity at the 500th cycle to the discharge capacity at the 1 st cycle was determined as a capacity retention rate. The results are shown in Table 2. In Table 2, the capacity retention rate is expressed as a percentage.

(High temperature storage characteristics)

The high temperature storage characteristics of the batteries Ato B and the comparative batteries C to D were evaluated as follows.

Each battery was charged at 25°C at a constant current of 2000 mA until the battery voltage reached 4.2 V, and then charged at a constant voltage of 4.2 V until the current value reached 100 mA. After charging, the internal resistance (initial internal resistance $R_0$) of the battery was measured.

New batteries of the batteries A to B and the comparative batteries C to D were charged in the same manner as above. The batteries after charging were stored for 20 in a 60°C environment After storage, the internal resistance (internal resistance R after storage) of each battery was measured.

The ratio of increase of the internal resistance R after storage to the initial internal resistance $R_0$ was determined as an internal resistance increase rate. The results are shown in Table 2. The internal resistance increase rate was calculated by the formula: $100 \times \{(R - R_0) / R_0\}$.

The measuring method of the above internal resistance is described below.

Each battery was discharged at 2000 mA (2A) until the battery voltage was reduced to 2.5 V. The battery was then charged at 25°C at a current of 2000 mA. When the battery was charged up to 1000 mAh, the charging was terminated. The battery after charging was allowed to stand for 1 hour, to measure the voltage $V_0$ of the battery after 1 hour. Thereafter, the battery was discharged at 25°C at a current of 2000 mA. The battery voltage $V_1$ of the battery after 10 seconds from the start of the discharge was measured. The internal resistance R was calculated by the following formula (1):

$$R(\Omega) = \{V_0(V) - V_1(V)\} / 2(A) \qquad (1).$$

[Table 2]

|  |  | Capacity retention rate (%) | Internal resistance increase rate (%) |
|---|---|---|---|
| Example 1 | Battery 1 | 96.4 | 4.8 |
| Example 2 | Battery 2 | 95.3 | 4.9 |
| Comparative Example 1 | Comparative battery 1 | 76.6 | 5.8 |
| Comparative Example 2 | Comparative battery 2 | 94.0 | 27.5 |

As shown in Table 2, the battery A and the battery B containing the positive electrode active material A and the positive electrode active material B, respectively, in which the average particle diameter of the primary particles was small, and the content of Al atoms was larger in a portion near the surface of the secondary particle than in a portion near the center thereof, exhibited excellent cycle characteristics and excellent high temperature storage characteristics. In the positive electrode active materials A and B, the average particle diameters of the primary particles constituting the positive electrode active materials A and B are small, and Al atoms are present also inside the positive electrode active materials A and B, although being less present as compared to in the portion near the surface. Presumably, for this reason, even when the positive electrode active material expanded and contracted due to charging and discharging, the influence of the changes in volume of the positive electrode active material was small.

Further, the positive electrode active materials A and B contain Al atoms, and the content of the Al atoms was larger in a portion near the surface of the secondary particle than in a portion near the center thereof. By adjusting the content of the Al atoms to be higher in a portion near the surface of the positive electrode active material, the formation of a coating film derived from non-aqueous electrolyte on the surface of the positive electrode active material can be prevented even during storage in a high temperature environment. Presumably, for this reason, the increase of the internal resistance of the battery during storage at high temperature was prevented, and the storage characteristics of the battery were improved.

In contrast, the comparative battery C including the positive electrode active material C containing Al atoms, in which, however, the average particle diameter of the primary particles was large, exhibited a greatly reduced capacity retention rate. This is presumably because the average particle diameter of the primary particles constituting the positive electrode active material was large, which increased the influence of the changes in volume of the primary particles associate with charging and discharging, and thus a crack occurred on the positive electrode active material particle.

The comparative battery D exhibited a high internal resistance increase rate, showing that the storage characteristics were greatly deteriorated. Since the positive electrode active material D does not contain Al atoms, a coating film derived from non-aqueous electrolyte is formed on the surface of the positive electrode active material D during storage in a high temperature environment. Presumably, as a result, the ability of the positive electrode active material for absorbing and desorbing lithium ions was reduced, and the internal resistance of the battery was increased.

Industrial Applicability

The non-aqueous electrolyte secondary battery of the present invention has excellent cycle characteristics and excellent storage characteristics. The non-aqueous electrolyte secondary battery of the present invention, therefore, is suitably applicable, in particular, as a power source for plug-in hybrid electric vehicles. In addition, because of its excellent cycle characteristics and excellent storage characteristics as described above, the non-aqueous electrolyte secondary battery of the present invention is suitably applicable, for example, as a power source for small portable electronic equipment such as notebook computers, a power source for hybrid electric vehicles and the like, or as a power storage device for household use.

**Claims**

1. A non-aqueous electrolyte secondary battery comprising a positive electrode including a positive electrode active material, a negative electrode including a negative electrode active material, a separator interposed between the positive electrode and the negative electrode, and a non-aqueous electrolyte, wherein
the positive electrode active material comprises secondary particles each being an aggregate of a plurality of primary particles, and the primary particles have an average particle diameter of 0.8 $\mu$m or less, and
the secondary particles contain aluminum atoms, and a content of the aluminum atoms is larger in a portion near the surface of each of the secondary particles than in a portion near the center of each of the secondary particles.

2. The non-aqueous electrolyte secondary battery in accordance with claim 1, wherein the content of the aluminum atoms increases from the portion near the center of each of the secondary particles toward the surface of each of the secondary particles.

3. The non-aqueous electrolyte secondary battery in accordance with claim 1, wherein the secondary particles contain aluminum atoms, lithium atoms, and a metal element other than aluminum atoms and lithium atoms, and a ratio of an amount of the aluminum atoms to a total amount of the metal element other than aluminum atoms and lithium atoms plus the aluminum atoms is 2 to 20 mol%.

4. The non-aqueous electrolyte secondary battery in accordance with claim 3, wherein the secondary particles include a lithium-transition metal composite oxide containing aluminum atoms.

5. The non-aqueous electrolyte secondary battery in accordance with claim 4, wherein the lithium-transition metal composite oxide containing aluminum atoms contains Li, Ni, Co and Al only as metal elements.

6. A plug-in hybrid electric vehicle comprising the non-aqueous electrolyte secondary battery of claim 1.

7. A method for producing a positive electrode active material, the method comprising the steps of:

   (a) allowing a compound containing aluminum atoms to be carried on a surface of a hydroxide containing a transition metal element to give an active material precursor,
   (b) mixing the active material precursor with a compound containing lithium atoms to give a mixture, and
   (c) heating the mixture to give a lithium-transition metal composite oxide containing aluminum atoms, wherein

   the step (a) includes a step of mixing an aqueous solution of an aluminum salt and an alkali aqueous solution with water in which a hydroxide containing a transition metal element is dispersed, to give particles containing aluminum atoms, and washing the particles containing aluminum atoms with water, followed by drying, to give the active material precursor.

F I G. 1

FIG. 2

**INTERNATIONAL SEARCH REPORT**

| International application No. |
|---|
| PCT/JP2009/001211 |

| A. CLASSIFICATION OF SUBJECT MATTER |
|---|
| *H01M4/48*(2006.01)i, *C01G53/00*(2006.01)n |

According to International Patent Classification (IPC) or to both national classification and IPC

| B. FIELDS SEARCHED |
|---|
| Minimum documentation searched (classification system followed by classification symbols) |
| H01M4/48, C01G53/00 |

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 2004-47437 A (Matsushita Electric Industrial Co., Ltd.),<br>12 February, 2004 (12.02.04),<br>Claims; Par. Nos. [0021] to [0039], [0048] to [0050], [0067], [0068]<br>& EP 1505672 A1      & US 2005/0221183 A1 | 1-4,7<br>5,6 |
| X<br>Y | JP 2002-198051 A (Matsushita Electric Industrial Co., Ltd.),<br>12 July, 2002 (12.07.02),<br>Claims; Par. Nos. [0021], [0027], [0059] to [0061], [0066] to [0068]<br>(Family: none) | 1-4,7<br>5,6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 April, 2009 (24.04.09) | 12 May, 2009 (12.05.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/001211

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2003-86182 A  (Matsushita Electric Industrial Co., Ltd.),<br>20 March, 2003 (20.03.03),<br>Claims; Par. Nos. [0031] to [0033]<br>& US 2003/0054251 A1    & US 2007/0009424 A1 | 1-4,7<br>5,6 |
| X<br>Y | WO 2002/054511 A1  (Matsushita Electric Industrial Co., Ltd.),<br>11 July, 2002 (11.07.02),<br>Claims; pages 6, 10<br>& US 2003/0013017 A1 | 1-4,7<br>5,6 |

Form PCT/ISA/210 (continuation of second sheet) (April 2007)

**REFERENCES CITED IN THE DESCRIPTION**

**Patent documents cited in the description**

- JP 2003068300 A
- JP 2003257427 A
- CN 1581543